# EUROPEAN PATENT SPECIFICATION

(11) **EP 1 577 357 B1**
(45) Date of publication and mention of the grant of the patent: **29.08.2007**
(21) Application number: 05006024.3
(22) Date of filing: 18.03.2005
(51) Int. Cl.: C09G 1/02

(54) **Polishing composition and polishing method**
Polierzusammensetzung und Poliermethode
Composition de polissage et procédé de polissage

(30) Priority: 19.03.2004 JP 2004081583
(43) Date of publication of application: 21.09.2005
(73) Proprietor: FUJIMI INCORPORATED, Nishikasugai-gun Aichi 452-8502 (JP)
(72) Inventor: Tamai, Kazusei c/o Fujimi Incorporated, Nishikasugai-gun Aichi 452-8502 (JP); Yamato, Yasuyuki c/o Fujimi Incorporated, Nishikasugai-gun Aichi 452-8502 (JP)
(74) Representative: Behnisch, Werner

(56) References cited:
- EP-A- 0 823 465
- US-A1- 2001 049 913
- US-A1- 2004 006 924
- US-B1- 6 258 140
- US-B1- 6 541 384

## Description

### BACKGROUND OF THE INVENTION

The present invention relates to a polishing composition used, for example, in polishing for forming a wired structure for a semiconductor device, and to a polishing method using such a polishing composition.

An alloy containing nickel and iron (a ferronickel alloy) such as a permalloy is a high permeable magnetic material having a property of being easily oxidized in a weak magnetic field, and is used in a transformer of a low-level input, a circuit-breaker for an excessive electric current, a magnetic head, and a magnetic shielding. The alloy is expected to be used in a semiconductor device such as a memory device of a next-generation computer, due to its properties.

When the wired structure for a semiconductor device is formed, a polishing composition is used which has been improved so as to fit to an application for polishing a metallic film containing copper, for instance, as is disclosed in Japanese Laid-Open Patent Publication No. 7-94455, or a polishing composition is used which has been improved so as to fit to an application for polishing copper and a tantalum-containing compound, for instance, as is disclosed in Japanese Laid-Open Paten Publication No. 2001-247853. However, any of these polishing compositions is not so suitable for an application for polishing a ferronickel alloy.

European Patent application publication EP 823465 A2 discloses a polishing composition for chemical mechanical polishing comprising a carboxylic acid, an oxidizing agent and water. The pH of this polishing composition is adjusted to 5 to 9 with an alkali.

Published US-patent application US 2001/0049913 A1 discloses a polishing composition including alkali metal ions, abrasive grains, a carboxylic acid, an oxidizing agent, and an anti-gelling agent in an aqueous medium. The pH of this polishing composition is in the range of about 1 to about 5, as adjusted by the addition of alkali metal hydroxide to the aqueous medium.

Published US-patent application US 2004/0006924 A1 discloses a polishing composition comprising an abrasive, phosphoric acid and an oxidizing agent, wherein the polishing composition has a pH preferably in the range of 3 to 7,5.

US-patent 6,541,384 discloses a composition optionally including one or more of the following compound types: a complexing agent; a corrosion inhibitor; an acid; and an abrasive.

Finally, US-patent No. 6,258,140 discloses a polishing composition comprising an abrasive, a polishing resistance reducing agent, selected from the group consisting of surfactant, a water-soluble polymer and a polyelectrolyte, and at least one polishing accelerator, selected from an inorganic acid, an organic acid and their aluminum; iron; nickel and cobalt salts; and water.

### SUMMARY OF THE INVENTION

Accordingly, an object of the present invention is to provide a polishing composition which is preferably used in an application for polishing an alloy containing nickel and iron (a ferronickel alloy), and to provide a polishing method using such a polishing composition.

To achieve the foregoing and other objectives and in accordance with the purpose of the present invention, a polishing composition is provided. The polishing composition, for use in an application for polishing an object including an alloy containing nickel and iron, includes an abrasive, a polyvinyl alcohol, phosphoric acid, and an oxidizing agent, and has a pH of 6 or less.

The present invention also provides a polishing method. The method includes preparing the above polishing composition and polishing an object including an alloy containing nickel and iron, by using the prepared polishing composition.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:

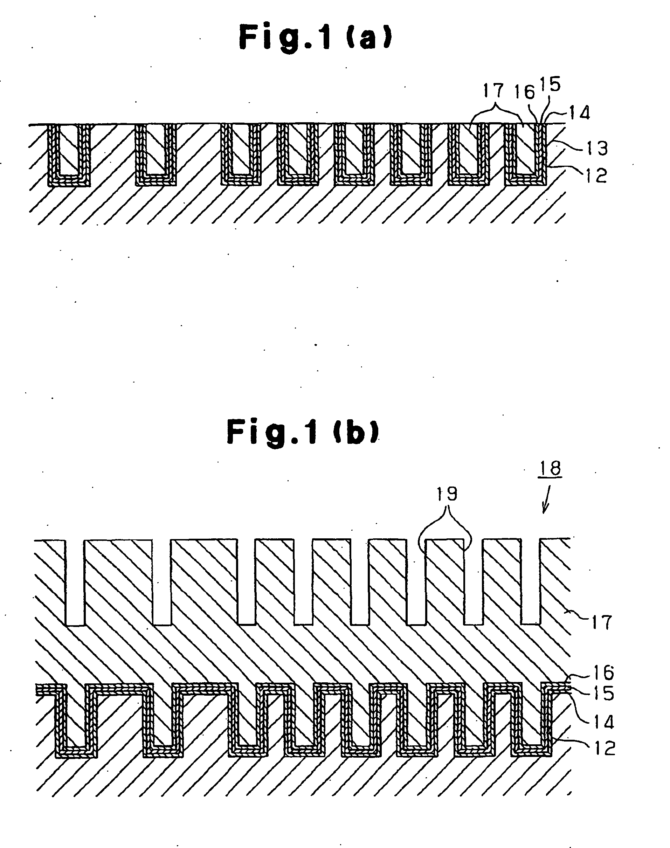

Figs. 1(a) and 1(b) are sectional views of an object to be polished for explaining a polishing method according to one embodiment of the present invention.

### DETAILED DESCRIPTION OF THE PREFERRED EMBODIMENTS

An embodiment of the present invention will now be described with reference to Figs. 1(a) and 1(b).

First of all, a method for forming the wired structure for a semiconductor memory device will be described. When the wired structure for the semiconductor memory device is formed, at first as shown in Fig. 1(b), the first barrier layer 14, a magnetic layer 15, the second barrier layer 16, and a conductor layer 17 are sequentially arranged on an insulator layer 13 having a trench 12 to form a layered body 18. The conductor layer 17 has an initial recess 19 corresponding to the trench 12 on the top face.

An insulator layer 13 may be formed of any of SiO₂, SiOF, and SiOC. The insulator layer 13 is formed by using SiH₄, SiH₂C₁₂, or tetraethoxysilane (TEOS) as a starting material for instance, through a chemical vapor deposition (CVD) process. The trench 12 is formed so as to acquire a predetermined design pattern, for instance, with a well-known lithography technology and a pattern-etching technology.

The first barrier layer 14 is arranged on an insulator layer 13 so as to cover the surface of the insulator layer 13 before a magnetic layer 15 is formed, and acts so as to prevent metallic atoms in the magnetic layer 15 and a conductor layer 17 from diffusing into the insulator layer 13. The first barrier layer 14 may be formed of a tantalum-containing compound such as tantalum nitride. Alternatively, the first barrier layer 14 may be formed of tantalum or a titanium compound. The first barrier layer 14 is formed with a spluttering technique for instance. The first barrier layer 14 has preferably enough thin thickness in comparison with the depth of the trench 12.

A magnetic layer 15 is arranged on the first barrier layer 14 so as to cover the surface of the first barrier layer 14, before the second harrier layer 16 is formed. The magnetic layer 15 is made of a ferronickel alloy. The ferronickel alloy includes, for instance, a permalloy containing 60 to 90 mass% nickel therein. The permalloy is a soft magnetic material having characteristics of a high magnetic permeability, a low coercive force, and a low loss. The magnetic layer 15 is preferably formed of the permalloy in order to increase the speeds of rewriting and reading out memorized contents in a semiconductor memory device. In order to improve the magnetic properties of the magnetic layer 15, the alloy constituting the magnetic layer 15 may contain a metal other than nickel and iron such as molybdenum, chromium, manganese, and copper. The content of molybdenum, chromium, manganese, or copper in an alloy is preferably 0.1 to 15 mass%. The magnetic layer 15 has preferably enough thin thickness in comparison with the depth of the trench 12. The magnetic layer 15 is hardly oxidized because of being covered with the barrier layers 14 and 16.

The second barrier layer 16 is arranged on a magnetic layer 15 so as to cover the surface of the magnetic layer 15 before a conductor layer 17 is formed, and acts so as to prevent metallic atoms in the conductor layer 17 from diffusing into an insulator layer 13. The second barrier layer 16 may be formed of a tantalum-containing compound such as tantalum nitride. Alternatively, the second barrier layer 16 may be formed of tantalum or a titanium compound. The second barrier layer 16 is formed with a sputtering technique for instance. The second barrier layer 16 has preferably enough thin thickness in comparison with the depth of a trench 12.

A conductor layer 17 is arranged on the second barrier layer 16 so as to fill at least a trench 12. The conductor layer 17 is formed of a copper-containing metal such as copper, a copper-aluminum alloy, and a copper-titanium alloy.

Subsequently, a portion of the conductor layer 17, a portions of the barrier layers 14 and 16, and a portion of the magnetic layer 15, each of which is positioned outside the trench 12, are removed by chemical mechanical polishing (CMP). Thereby, as shown in Fig. 1(a), the other portion of the conductor layer 17, the other portions of the barrier layers 14 and 16, and the other portion of the magnetic layer 15, each of which is positioned inside the trench 12, remain on the insulator layer 13, and the remaining portion of the conductor layer 17 functions as wiring.

A polishing composition according to the present embodiment is used in chemical mechanical polishing for removing the portions of the layers 14 to 17 positioned outside the trench 12. The chemical mechanical polishing for removing the portions of the layers 14 to 17 positioned outside the trench 12 may include the first to the third polishing steps. In the first polishing step, a part of the portion of the conductor layer 17 positioned outside the trench 12 is removed so that the initial recess 19 is removed. In the subsequent second polishing step, another part of the portion of the conductor layer 17 positioned outside the trench 12 is removed so that the top face of the second barrier layer 16 positioned outside the trench 12 is exposed. In the subsequent third polishing step, the portion of the barrier layers 14 and 16 and the portion of the magnetic layer 15, each of which is positioned outside the trench 12, and the remaining part of the portion of the conductor layer 17 positioned outside the trench 12 are removed so that the top face of the insulator layer 13 is exposed. Tf a chemical mechanical polishing process for removing the portions of the layers 14 to 17 positioned outside the trench 12 includes the first to the third polishing steps, a polishing composition according to the present embodiment may be used in any of the first to the third polishing steps. However, the composition is preferably used in the second and/or third polishing steps among them.

A polishing composition of the present embodiment contains an abrasive, phosphoric acid, an oxidizing agent, a polyvinyl alcohol, and water.

The abrasive in the polishing composition has a function of mechanically polishing an object to be polished. The polishing composition preferably contains the abrasive made of at least one compound among silicon dioxide, aluminum oxide, cerium oxide, zirconium oxide, titanium oxide, and silicon carbide. Among them, silicon dioxide or aluminum oxide is preferable and silicon dioxide is most preferable, in order to reduce the surface roughness of a polished object. The silicon dioxide may be any one of colloidal silica, fumed silica, and precipitated silica. Among them, colloidal silica is particularly preferable in the respect of having a generally small average particle diameter and easily finishing the surface of a polished object into fine roughness. Colloidal silica synthesized by a sol-gel technique contains an extremely small amount of impurity elements, so that colloidal silica to be contained in the polishing composition is preferably synthesized by the sol-gel technique. Colloidal silica is synthesized with the sol-gel technique through dropping methyl silicate into a solvent consisting of methanol, ammonia, and water and hydrolyzing the methyl silicate in the solvent. When it is not necessary to consider pollution due to impurity elements, colloidal silica synthesized by an ion exchange method may be used. When colloidal silica is synthesized with the ion exchange method, sodium silicate is used as a starting material.

When aluminum oxide is contained as an abrasive in the polishing composition, from the viewpoint of enhancing the capability of the polishing composition for polishing the barrier layers 14 and 16 and the insulator layer 13, the average particle diameter of the abrasive (aluminum oxide) measured by an electric resistance method (a Coulter method) is preferably 0.05 µm or larger and further preferably 0.2 µm or larger. On the other hand, in order to reduce the surface roughness of a polished object and to inhibit scratches occurring while polishing the object, the average particle diameter of the abrasive (aluminum oxide) measured by the electric resistance method is preferably 1.3 µm or less, and further preferably 0.8 µm or less.

When fumed silica is contained as an abrasive in the polishing composition, from the viewpoint of enhancing the capability of the polishing composition for polishing the barrier layers 14 and 16 and the insulator layer 13, the average particle diameter of the abrasive (fumed silica) measured by a laser diffraction method is preferably 0.02 µm or larger and further preferably 0.05 µm or larger. On the other hand, in order to reduce the surface roughness of a polished object and to inhibit scratches occurring while polishing the object, the average particle diameter of the abrasive (fumed silica) measured by the laser diffraction method is preferably 0.5 µm or less, and further preferably 0.3 µm or less.

When colloidal silica is contained as an abrasive in the polishing composition, from the viewpoint of enhancing the capability of the polishing composition fcr polishing the barrier layers 14 and 16 and the insulator layer 13, the average particle diameter of the abrasive (colloidal silica) measured by a laser diffraction method is preferably 0.01 µm or larger. On the other hand, in order to reduce the surface roughness of a polished object and to inhibit scratches occurring while polishing the object, the average particle diameter of the abrasive (colloidal silica) measured by the laser diffraction method is preferably 0.5 µm or less, and further preferably 0.3 µm or less.

The content of the abrasive in the polishing composition is, from the viewpoint of enhancing the capability of a polishing composition for polishing the magnetic layer 15 and the insulator layer 13, preferably 0.1 mass% or more, further preferably 1 mass% or more, and particularly preferably 5 mass% or more. On the other hand, from the viewpoint of enhancing the dispersion stability of the polishing composition, the content of the abrasive in the polishing composition is preferably 20 mass% or less, further preferably 15 mass% or less, and particularly preferably 10 mass% or less.

Phosphoric acid in the polishing composition has the function of chemically polishing an object to be polished through corrosion or etching, and acts as a polishing accelerator for enhancing the capability of the polishing composition for polishing the barrier layers 14 and 16 and the magnetic layer 15, and particularly enhancing the capability of the polishing composition for polishing the magnetic layer 15. Phosphoric acid to be contained in the polishing composition is preferably at least one compound selected from orthophosphoric acid, a polyphosphoric acid, pyrophosphoric acid, metaphosphoric acid, and hexametaphosphoric acid. Among them, orthophosphoric acid is preferable from the viewpoint of enhancing the storage stability of the polishing composition and inhibiting the polishing capability of the polishing composition from decreasing with time.

The content of phosphoric acid in the polishing composition is, from the viewpoint of enhancing the capability of the polishing composition for polishing the conductor layer 17, preferably 0.1 mass% or more. On the other hand, in order to avoid the polishing composition from increasing an environmental load due to its high acidity and from lowering its handling easiness, the content of phosphoric acid is preferably 5.0 mass% or less, and further preferably 1.0 mass% or less.

An oxidizing agent in the polishing composition has the function of oxidizing the surface of an object to be polished and particularly plays a role of enhancing the capability of the polishing composition for polishing the conductor layer 17. An oxidizing agent to be contained in the polishing composition is preferably at least one compound selected from persulfuric acid, periodic acid, perchloric acid, peracetic acid, performic acid, nitric acid and a salt thereof, and hydrogen peroxide. Among them, hydrogen peroxide is preferable because hydrogen peroxide little contaminated with metal impurities is inexpensively and easily available.

The content of an oxidizing agent in the polishing composition is, from the viewpoint of enhancing the capability of the polishing composition for polishing the conductor layer 17, preferably 0.01 mass% or more and further preferably 0.03 mass% or more. On the other hand, in order to avoid the oxidizing agent from corroding the conductor layer 17 because of having too strong action of oxidizing the conductor layer 17, the content cf the oxidizing agent is preferably 3.0 mass% or less, and further preferably 1.0 mass% or less.

Water in the polishing composition acts as a medium for dispersing or dissolving components other than the water in the polishing composition. Water to be contained in the polishing composition preferably contains as little impurity as possible so as not to hinder the actions of other components, and preferably is pure water from which impurity ions have been removed through an ion exchange resin and then foreign materials are removed through a filter; ultra pure water; or distilled water.

The pH of the polishing composition is, in order to avoid the polishing composition from increasing an environmental load due to its high acidity and from lowering its handling easiness, preferably 1.5 or more, and further preferably 2 or more. On the other hand, in order to possess the capability of the polishing composition for polishing the magnetic layer 15 at a high stock removal rate, the polishing composition essentially needs to have the pH of 6 or less. In addition, in order to enhance the capability of the polishing composition for polishing the conductor layer 17, the polishing composition preferably has the pH of 5 or less.

In order to adjust the pH of a polishing composition according to the present embodiment into a desired value, a pH adjuster may be added to the polishing composition. A pH adjuster to be added to the polishing composition is preferably a basic compound, and specifically is preferably at least one compound from ammonia, an ammonium salt, an amine, a quaternary ammonium hydroxide, a quaternary ammonium salt, a hydroxide of an alkaline metal, and an alkali metal salt. Among them, ammonia and an ammonium salt are preferable because those with little contamination by metal impurities are inexpensively and easily available.

A corrosion inhibitor may be added to a polishing composition according to the present embodiment as needed. When a corrosion inhibitor is added to the polishing composition, corrosion of the conductor layer 17 due to phosphoric acid in the polishing composition is inhibited. A corrosion inhibitor to be added into the polishing composition is preferably at least one compound from benzotriazol, benzimidazole, triazole, imidazole, tolyltriazole, and a derivative thereof. Among them, benzotriazol and a derivative thereof are preferable because of having a strong corrosion-preventive action. The derivative of benzotriazole includes 1-(2,3-dihydroxypropyl) benzotriazol, 1-[N,N-bis(hydroxydimethyl) aminomethyl] benzotriazol, and 1-(1,2-dicarboxyethyl) benzotriazol.

From the viewpoint of strongly inhibiting corrosion of the conductor layer 17, the content of a corrosion inhibitor in the polishing composition to which the corrosion inhibitor is added is preferably 0.01 mass% or more, and further preferably 0.1 mass% or more. On the other hand, from the viewpoint of inhibiting decrease in the capability of the polishing composition for polishing the conductor layer 17, the content of the corrosion inhibitor in the polishing composition to which the corrosion inhibitor is added is preferably 1.0 mass% or less, and further preferably 0.6 mass% or less.

A water-soluble polymer may be added to a polishing composition according to the present embodiment as needed. When a water-soluble polymer is added to the polishing composition, the occurrence of a step on the surface of an object to be polished during being polished is inhibited. A water-soluble polymer to be added into the polishing composition is preferably at least one compound from: a vinyl polymer such as a polyvinyl alcohol and a polyvinylpyrrolidone; a polysaccharide including a water-soluble cellulose such as carboxymetyl cellulose and hydroxypropylcellulose; a polyethylen oxide; a polypropylene oxide; and a copolymer of a polyethylen oxide and a polypropylene oxide. Among them, a polyvinyl alcohol is preferable because of having a strong function of inhibiting the occurrence of the step on the surface. Polyvinyl alcohol is synthesized by saponifying (hydrolyzing) polyvinyl acetate. Polyvinyl alcohol includes a completely saponified type polyvinyl alcohol with a saponification rate of 98.0 mol% or higher and a partially saponified type polyvinyl alcohol with a saponification rate of 88.0 mol% or higher and less than 98.0 mol%, but the completely saponified type polyvinyl alcohol is particularly preferable.

The molecular weight of a water-soluble polymer added to the polishing composition is preferably 10,000 to 500,000, and further preferably 10,000 to 100,000. This is because the water-soluble polymer having the molecular weight in the above described range is generally easily available.

The content of a water-soluble polymer in the polishing composition to which the water-soluble polymer is added is, in order to strongly inhibit the occurrence of the step on the surface, preferably 0.001 mass % or more, and further preferably 0.01 mass% or more. On the other hand, in order to improve the capability of the polishing composition for polishing the conductor layer 17, the content of the water-soluble polymer in the polishing composition to which the water-soluble polymer is added is preferably 0.5 mass% or less, and further preferably 0.2 mass% or less.

Chemical mechanical polishing for removing the portions of the layers 14 to 17 positioned outside the trench 12 may cause a phenomenon called "dishing" by which the level of the top surface of the portion of the conductor layer 17 positioned inside the trench 12 is lowered, and a phenomenon called "erosion" by which the level of the top surface of an area in which the trench 12 is thickly formed is lowered. However, when the object is polished with the use of a polishing composition containing a water-soluble polymer, the water-soluble polymer acts so as to protect the surface of the object to inhibit the expansion of dishing and erosion. In addition, an abrasive, phosphoric acid, and an oxidizing agent in the polishing composition cooperatively acts, and promotes a polishing action for the conductor layer 17 and the magnetic layer 15. For instance, the phosphoric acid promotes the function of the oxidizing agent for oxidizing the surfaces of the conductor layer 17 and the magnetic layer 15, and thereby enhances the capability of the polishing composition for chemically polishing an object to be polislied. Accordingly, a polishing composition according to the present embodiment can polish the conductor layer 17 and the magnetic layer 15 at a high stock removal rate.

It should be apparent to those skilled in the art that the present invention may be embodied in many other specific forms without departing from the spirit or scope of the invention. Particularly, it should be understood that the invention may be embodied in the following forms.

The contents of nickel and iron in the alloy constituting the magnetic layer 15 are arbitrary, and both contents may be appropriately changed.

Into the polishing composition, a well-known additive such as a chelating agent, an antirust agent, an antiseptic agent, a mildewproofing agent, and an antifoaming agent may be added.

The polishing composition may be prepared by diluting a stock solution with water at the time of use. The stock solution is easy in storage and transportation.

The polishing composition may be stored in the state where an oxidizing agent is separated from the other components. In the above case, the polishing composition is provided for use after the oxidizing agent has been mixed with the other components. Thereby, the oxidizing agent is prevented from decomposing in the polishing composition during storage.

A polishing composition may be used in an application for polishing a magnetic head or a magnetic disk made of a permalloy, instead of a polishing application for forming the wired structure for a semiconductor device.

Water in the polishing composition may be omitted. Specifically, the polishing composition may be comprised of an abrasive, phosphoric acid, and an oxidizing agent.

In the next place; Examples and Comparative Examples according to the present invention will be described.

For the purpose of preparing a polishing composition according to Examples 1 to 27 and Comparative Examples 1 to 6, each component shown in Table 1 was mixed with water. The results of having measured the pH of each polishing composition according to the Examples 1 to 27 and the Comparative Examples 1 to 6 are shown in Table 1 together. Here, the unit of a value which indicates the content of each component in Table 1, is mass%.

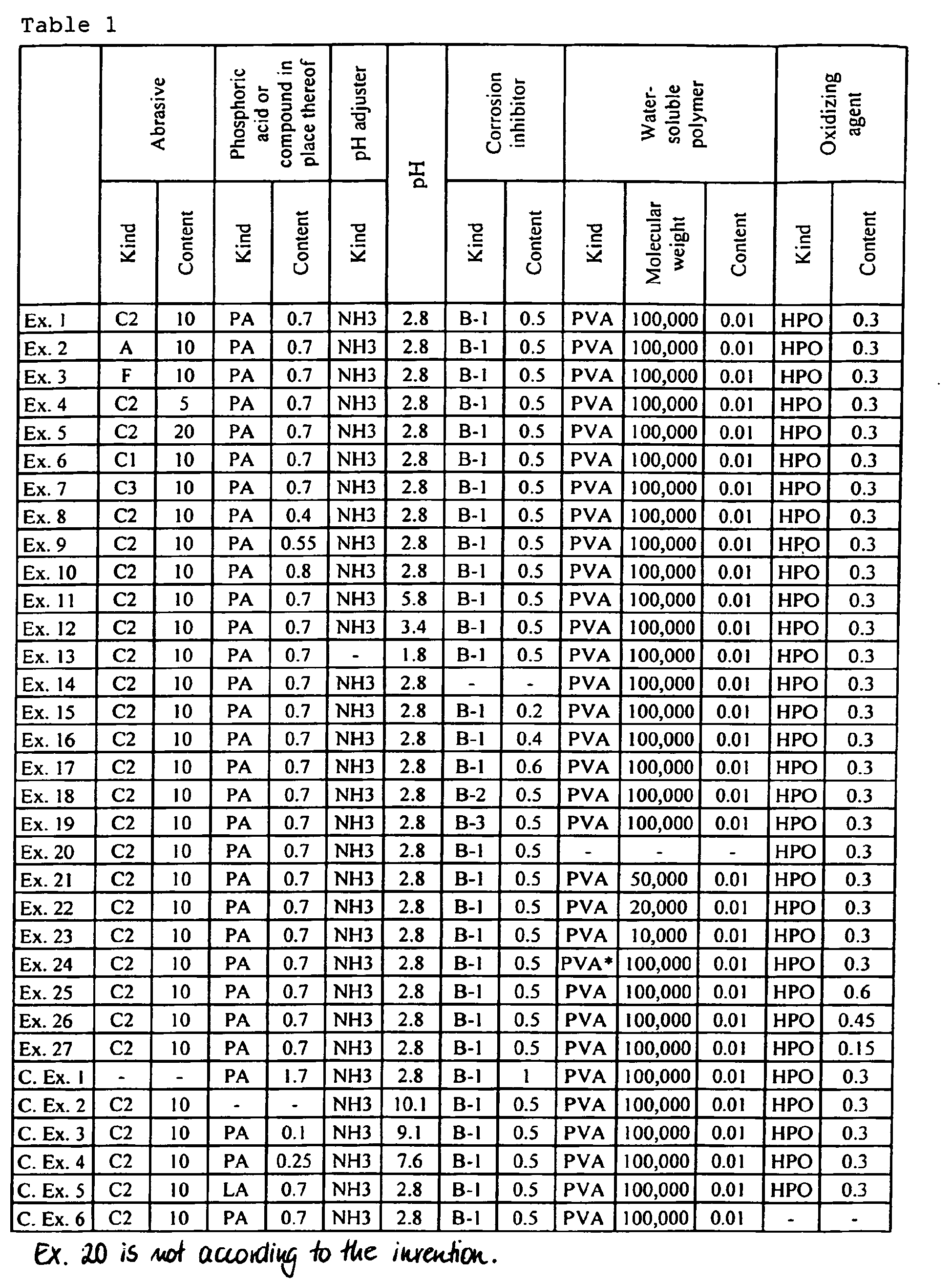

In the column entitled "Abrasive" of Table 1,
"C1" indicates colloidal silica with the average particle diameter of 0.03 µm,
"C2" indicates colloidal silica with the average particle diameter of 0.07 µm,
"C3" indicates colloidal silica with average particle diameter of 0.22 µm,
"A" indicates alumina with the average particle diameter of 0.3 µm, and
"F" indicates fumed silica with the average particle diameter of 0.2 µm.

The average particle diameters of colloidal silica and fumed silica were measured with the use of "N4 Plus Submicron Particle Sizer" made by Beckman Coulter Inc., and the average particle diameter of alumina was measured with the use of "Coulter Multisizer II" made by Beckman Coulter Inc.

In the column entitled "Phosphoric acid or compound in place thereof" of Table 1,
"PA" indicates orthophosphoric acid and
"LA" indicates lactic acid.

In the column entitled "pH regulator" of Table 1, "NH3" indicates ammonia.

In the column entitled "Corrosion inhibitor" of Table 1, "B-1" indicates benzotriazol,
"R-2" indicates 1-(2,3-dihydroxypropyl) benzotriazol, and
"B-3" indicates 1-[N,N-bis(hydroxydimethyl) aminomethyl]-benzotriazol.

In the column entitled "Water-soluble polymer" of Table 1.
"PVA" indicates a completely saponified type polyvinyl alcohol with a saponification rate of 98 mol% or higher, and
"PVA*" indicates a partially saponified type polyvinyl alcohol with a saponification rate of about 88 mol%.

In the column entitled "Oxidizing agent" of Table 1, "HPO" indicates hydrogen peroxide.

With the use of each polishing composition according to Examples 1 to 27 and Comparative Examples 1 to 6, a copper blanket-wafer (a wafer A), a permalloy blanket-wafer (a wafer B), a tantalum blanket-wafer (a wafer C), and a silicon dioxide blanket-wafer (a wafer D) were polished under the following polishing conditions. The thickness of each wafer was measured before and after polishing, and a polishing rate was calculated by dividing the difference between the thicknesses of each wafer before and after polishing by polishing hours (30 seconds). The results are shown in the column of "Stock removal rate" in Table 2. As for the measurement of the thicknesses, the copper blanket-wafer, the permalloy blanket-wafer, and the tantalum blanket-wafer were measured with the use of a sheet resistance instrument "VR-1.20" made by Kokusai Electric System Service Co., Ltd., and the silicon dioxide blanket-wafer was measured with the use of a light interference type thickness measurement instrument "ASET-F5" made by KLA-Tencor Corporation. The copper blanket-wafer has a copper film formed on an 8-inch silicon wafer with an electroplating method. The permalloy blanket-wafer has a permalloy film (consisting of 81.4 mass% nickel and 18.6 mass% iron) formed on an 8-inch silicon wafer with a sputtering technique. The tantalum blanket-wafer has a tantalum film formed on an 8-inch silicon wafer with a sputtering technique. The silicon dioxide blanket wafer has a silicon dioxide film formed on an 8-inch silicon wafer with a CVD process with the use of TEOS as a starting material.

### <Polishinq conditions>

Polishing apparatus: single-sided CMP polishing machine "Mirra" made by Applied Materials Inc.,
Polishing pad: multilayered polishing pad "IC-1000/Suba400" made of polyurethane and made by Rodel Corpora Lion,
Polishing pressure: 17.3 kPa (= about 2.5 psi),
Rotational frequency of press platen: 80 min⁻¹
Rate of feeding polishing composition: 200 mL/min,
Rotational frequency of carrier for supporting wafer: 80 min⁻¹.

A copper patterned wafer made by ADVANTEC Corp, which possesses 854 mask patterns, was prepared. The copper patterned wafer has a first barrier layer made of tantalum with the thickness of 15 to 20 nm, a magnetic layer made of a permalloy with the thickness of 70 nm, a second barrier layer made of tantalum with the thickness of 15 to 20 nm, and a conductor layer made of copper with the thickness of 1,000 nm, sequentially arranged on an insulator layer made of silicon dioxide having trenches, and has an initial recess with the depth of 800 nm on the top surface. First of all, the copper patterned wafer was preliminarily polished with the use of slurry for polishing copper. Afterwards, the wafer was polished with the use of each polishing composition according to Examples 1 to 27 and Comparative Examples 1 to 6 under the above polishing conditions. The polishing operation was finished after having been further polished for a predetermined period of time after an end point signal had been detected. The predetermined period of time corresponds to 20% of the polishing period before the end point signal has been detected.

A dishing depth was measured in the region in which a trench with the width of 100 µm is formed before and after polishing with the use of each polishing composition. An erosion depth was measured in the region in which a trench with the width of 10 µm was formed before and after polishing with the use of each polishing composition. The value obtained by subtracting the dishing depth measured after polishing from the dishing depth measured before polishing is shown in the column entitled "Dishing" of Table 2, and the value obtained by subtracting the erosion depth measured after polishing from the erosion depth measured before polishing is shown in the column entitled "Erosion" of Table 2. The dishing depth and the erosion depth were measured with the use of a profiler "HRP340" which is a contact-type surface measurement instrument made by KLA-Tencor Corp. Then, the dishing depth was 10 nm, and the erosion depth was 0 nm when these were measured on a copper patterned wafer before being polished with the use of each polishing composition. The plus value of the dishing depth means that the portion of the conductor layer positioned inside the trench is depressed, and the minus value of the dishing depth means that the portion of the conductor layer positioned inside the trench protrudes. In the columns entitled "Dishing" and "Erosion" of Table 2, the mark of asterisk (*) means that the copper patterned wafer could not be polished because the polishing composition did not almost have the capability for polishing copper or a permalloy.

**Table 2**

| | Stock removal rate | | | | Dishing [nm] | Erosion [nm] |
|---|---|---|---|---|---|---|
| | Wafer A [nm/min] | Wafer B [nm/min] | Wafer C [nm/min] | WaferD [nm/min] | | |
| Ex. 1 | 190 | 170 | 70 | 90 | -25 | 0 |
| Ex. 2 | 190 | 170 | 120 | 130 | -40 | 0 |
| Ex. 3 | 190 | 170 | 110 | 120 | -35 | 0 |
| Ex. 4 | 190 | 170 | 45 | 60 | 100 | 5 |
| Ex. 5 | 190 | 170 | 120 | 140 | -55 | 10 |
| Ex. 6 | 190 | 170 | 50 | 55 | 60 | 5 |
| Ex. 7 | 190 | 170 | 70 | 90 | -50 | 5 |
| Ex. 8 | 160 | 160 | 70 | 90 | -50 | 0 |
| Ex. 9 | 180 | 170 | 70 | 90 | -40 | 0 |
| Ex. 10 | 210 | 170 | 70 | 90 | 30 | 5 |
| Ex. 11 | 60 | 80 | 40 | 50 | -50 | 0 |
| Ex. 12 | 100 | 130 | 50 | 70 | -40 | 0 |
| Ex. 13 | 450 | 400 | 70 | 90 | 250 | 15 |
| Ex. 14 | 150 | 170 | 70 | 90 | 150 | 5 |
| Ex. 15 | 300 | 170 | 70 | 90 | 120 | 10 |
| Ex. 16 | 200 | 170 | 70 | 90 | 60 | 5 |
| Ex. 17 | 120 | 170 | 70 | 90 | -60 | 0 |
| Ex. 18 | 140 | 140 | 70 | 90 | -45 | 0 |
| Ex. 19 | 120 | 150 | 70 | 90 | -50 | 0 |
| Ex. 20 | 130 | 150 | 80 | 110 | 25 | 40 |
| Ex. 21 | 200 | 170 | 75 | 80 | -35 | 0 |
| Ex. 22 | 200 | 165 | 80 | 80 | -40 | 0 |
| Ex. 23 | 200 | 160 | 85 | 80 | -40 | 0 |
| Ex. 24 | 140 | 140 | 35 | 10 | 80 | 5 |
| Ex. 25 | 180 | 150 | 70 | 90 | 45 | 5 |
| Ex. 26 | 180 | 160 | 70 | 90 | 45 | 5 |
| Ex. 27 | 150 | 210 | 70 | 90 | 40 | |
| C. Ex. 1 | 30 | 40 | 0 | 0 | * | * |
| C. Ex. 2 | 200 | 10 | 40 | 50 | * | * |
| C. Ex. 3 | 220 | 10 | 30 | 40 | * | 0 |
| C. Ex. 4 | 40 | 30 | 35 | 45 | * | 0 |
| C. Ex. 5 | 10 | 30 | 110 | 120 | * | |
| C. Ex. 6 | 10 | 20 | 70 | 90 | * | * |

As shown in Table 2, stock removal rates for permalloy blanket-wafers in Examples 1 to 27 showed higher values than those for permalloy blanket-wafers in Comparative Examples 1 to 6. When comparing the results on dishing and erosion between Example 1 and Example 24, it was elucidated that a completely saponified type polyvinyl alcohol showed a stronger function of inhibiting the occurrence of dishing and erosion (a step on the surface) than a partially saponified type polyvinyl alcohol did. From the results of Examples 1 and 8 to 10, it was confirmed that when a polishing composition contained phosphoric acid exceeding 0.4 mass%, the polishing composition showed improved stock removal rates for a copper blanket-wafer and a permalloy blanket-wafer.

On the other hand, any polishing composition of Comparative Examples 1 to 6 did not have the capability for polishing a permalloy blanket-wafer with a high sLock removal rate. The polishing compositions of Comparative Examples 1, and 4 to 6 also did not have the capability for polishing a copper blanket-wafer with a high stock removal rate. This is because the polishing composition of Comparative Example 1 did not contain an abrasive, the polishing compositions of Comparative Examples 2 and 5 did not contain phosphoric acid, the polishing composition of Comparative Example 6 did not contain an oxidizing agent, and the polishing compositions of Comparative Examples 3 and 4 had the pH not less than 6.

The present examples and embodiments are to be considered as illustrative and not restrictive and the invention is not to be limited to the details given herein, but may be modified within the scope and equivalence of the appended claims.

## Claims

1. A polishing composition that is usable for polishing a magnetic layer of an alloy containing nickel and iron, which is arranged on an insulator layer with a trench, the polishing composition **characterized by** an abrasive, phosphoric acid, an oxidizing agent, and a polyvinyl alcohol, and wherein the polishing has a pH of 6 or less.

2. The polishing composition according to claim 1, **characterized in that** the phosphoric acid is at least one compound selected from the group consisting of orthophosphoric acid, polyphosphoric acid, pyrophosphoric acid, metaphosphoric acid, and hexametaphosphoric acid.

3. The polishing compostion according to claim 1 or 2, **characterized in that** content of phosphoric acid in the polishing composition is 0.1 to 1.0 mass%.

4. The polishing composition according to any one of claims 1 to 3, further **characterized by** a corrosion inhibitor.

5. The polishing composition according to claim 4, **characterized in that** the corrosion inhibitor is benzotriazole or a derivative thereof.

6. The polishing composition according to claim 1, **characterized in that** the polyvinyl alcohol is a completely saponified polyvinyl alcohol.

7. A polishing method **characterized by**:
preparing the polishing composition according to any one of claim 1 to 6; and polishing a magnetic layer of an alloy containing nickel and iron, which is arranged on an insulator layer with a trench, by using the prepared polishing composition.

## Patentansprüche

1. Polierzusammensetzung, die zum Polieren einer magnetischen Schicht aus einer Nickel und Eisen enthaltenden Legierung einsetzbar ist, die auf einer Isolatorschicht mit einem Graben angeordnet ist, wobei die Polierzusammensetzung durch ein abrasives Mittel, Phosphorsäure, ein Oxidationsmittel, und einen Polyvinylalkohol **gekennzeichnet** ist, und wobei das Poliermittel einen pH-Wert von 6 oder darunter aufweist.

2. Polierzusammensetzung nach Anspruch 1, **dadurch gekennzeichnet, dass** die Phosphorsäure zumindest eine Verbindung ist, ausgewählt aus der Gruppe, bestehend aus Orthophosphorsäure, Polyphosphorsäure, Pyrophosphorsäure, Metaphosphorsäure und Hexametaphosphorsäure.

3. Polierzusammensetzung nach Anspruch 1 oder 2, **dadurch gekennzeichnet, dass** der Gehalt an Phosphorsäure in der Poliermittelzusammensetzung 0,1 bis 1,0 Massen-% beträgt.

4. Polierzusammensetzung nach einem der Ansprüche 1 bis 3, weiterhin **gekennzeichnet durch** einen Korrosionsinhibitor.

5. Polierzusammensetzung nach Anspruch 4, **dadurch gekennzeichnet, dass** der Korrosionsinhibitor Benzotriazol oder ein Derivat hiervon ist.

6. Polierzusammensetzung nach Anspruch 1, **dadurch gekennzeichnet, dass** der Polyvinylalkohol ein vollständig verseifter Polyvinylalkohol ist.

7. Polierverfahren, **gekennzeichnet durch**:
Herstellen einer Polierzusammensetzung nach einem der Ansprüche 1 bis 6; und Polieren einer magnetischen Schicht aus einer Nickel und Eisen enthaltenden Legierung, die auf einer Isolartorschicht mit einem Graben angeordnet ist, unter Verwendung der hergestellten Polierzusammensetzung.

## Revendications

1. Composition de polissage qui est utilisable pour polir une couche magnétique à base d'un alliage contenant du nickel et du fer, qui est disposée sur une couche d'isolateur pourvue d'une tranchée, la composition de polissage étant **caractérisée par** un abrasif, un acide phosphorique, un agent d'oxydation, et un alcool polyvinylique, et dans laquelle la composition de polissage a un pH de 6 ou moins.

2. Composition de polissage selon la revendication 1, **caractérisée en ce que** l'acide phosphorique est au moins un composé choisi dans le groupe constitué par l'acide orthophosphorique, l'acide polyphosphorique, l'acide pyro-phosphorique, l'acide métaphosphorique, et l'acide hexamétaphosphorique.

3. Composition de polissage selon la revendication 1 ou 2, **caractérisée en ce que** la teneur d'acide phosphorique dans la composition de polissage est de 0,1 à 1,0 % en poids.

4. Composition de polissage selon l'une quelconque des revendications 1 à 3 **caractérisée, en outre, par** un inhibiteur de corrosion.

5. Composition de polissage selon la revendication 4, **caractérisée en ce que** l'inhibiteur de corrosion est un benzotriazole ou un dérivé de celui-ci.

6. Composition de polissage selon la revendication 1, **caractérisée en ce que** l'alcool polyvinylique est un alcool polyvinylique complètement saponifié.

7. Procédé de polissage **caractérisé par** :
la préparation de la composition de polissage selon l'une quelconque des revendications 1 à 6 ; et
le polissage d'une couche magnétique à base d'un alliage contenant du nickel et du fer, qui est disposée sur une couche d'isolateur pourvue d'une tranchée, en utilisant la composition de polissage préparée.
